# EUROPEAN PATENT SPECIFICATION

(11) **EP 0 661 200 B1**
(45) Date of publication and mention of the grant of the patent: **24.09.1997**
(21) Application number: 94120323.4
(22) Date of filing: 21.12.1994
(51) Int. Cl.: B62D 1/16, B60R 25/02

(54) **Arrangements for automotive steering column**
Fahrzeuglenksäulen-Anordnungen
Dispositif de colonne de direction pour véhicules

(30) Priority: 28.12.1993 JP 335002/93
(43) Date of publication of application: 05.07.1995
(73) Proprietor: NISSAN MOTOR CO., LTD., Yokohama City (JP)
(72) Inventor: Watanabe, Kunihiko, Yamato City, Kanagawa Pref. (JP); Yamada, Katsumi, Hiratsuka City, Kanagawa Pref. (JP); Hanada, Kotaro, Hadano City, Kanagawa Pref. (JP)
(74) Representative: Grünecker, Kinkeldey, Stockmair & Schwanhäusser Anwaltssozietät

(56) References cited:
- US-A- 4 411 331

## Description

### BACKGROUND OF THE INVENTION

### 1. Field of the Invention

The present invention relates to arrangements for an automotive steering column, and more particularly to arrangements of a steering column cover, a key cylinder for receiving an ignition key, a tilt lever for tilting the steering column, and an ignition switch connector for connecting the key cylinder with an electrical system for starting an automotive engine, which are associated with the steering column.

### 2. Description of the Prior Art

Hitherto, various arrangements for an automotive steering column have been proposed. For example, JP-U-61-70170 discloses a waterproof structure of a steering column cover 5. This structure is characterized in that a gap between a push button 10 for locking a steering wheel and the steering column cover 5 is sealed by a waterproof cap 12 of the push button 10.

JP-U-60-137672 discloses a steering column cover structure for covering a steering column. This steering column cover has upper and lower half portions 11 and 12 which are joined with each other, and a cylindrical flange portion 11a and 12a defining an opening which is to be fitted into a boss portion 4 of a steering wheel. The cylindrical flange portion has upper and lower portions 11a and 12a. One of these portions 11a and 12a has a pawl 11b, and the other has a notch 12b. With this, upon engagement of the pawl and the notch, the upper and lower portions 11a and 12a of the cylindrical flange portion will not have a gap therebetween.

JP-U-56-33761 discloses another steering column cover structure having upper and lower half portions 1a and 1b. One of the upper and lower half portions 1a and 1b is monolithically formed with a fixing portion 2, and the other is formed with a supporting portion 3 for supporting the fixing portion 2. A unit of an engine switch is fixed to the fixing portion 2.

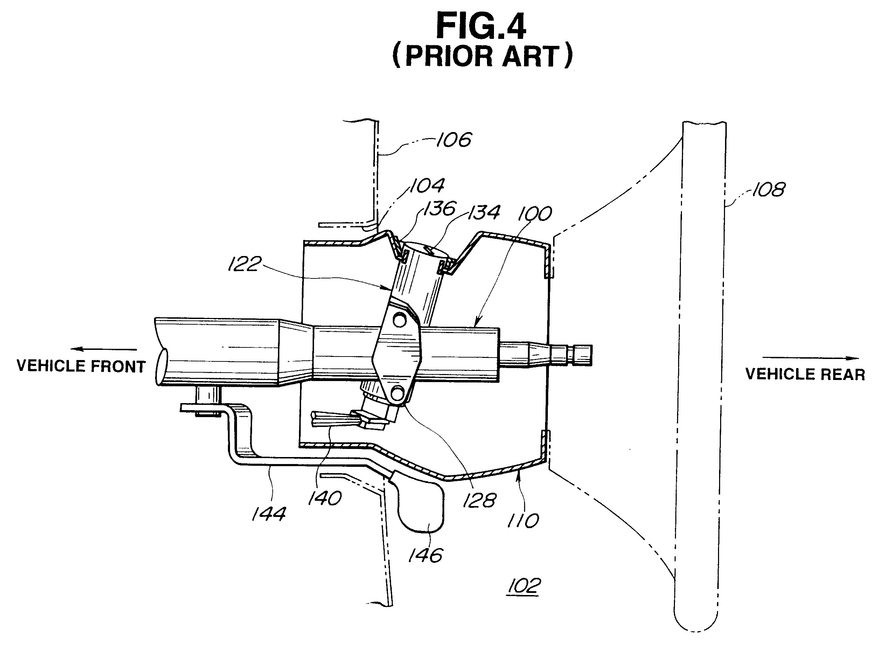

In order to clarify the task of the present invention, one conventional arrangement for an automotive steering column will be outlined in the following, with reference to Figs. 4-6 of the accompanying drawings. This arrangement corresponds to the preamble of claim 1.

As is seen from Fig. 4, an automotive steering column 100 extends to a passenger's room 102 through an opening 104 of an instrument panel 106 and is connected at an upper end thereof with a steering wheel 108. A steering column cover 110 is provided for covering an upper end portion of the steering column 100. The opening 104 has a sufficient size so as to receive therein the steering column cover 110, as illustrated.

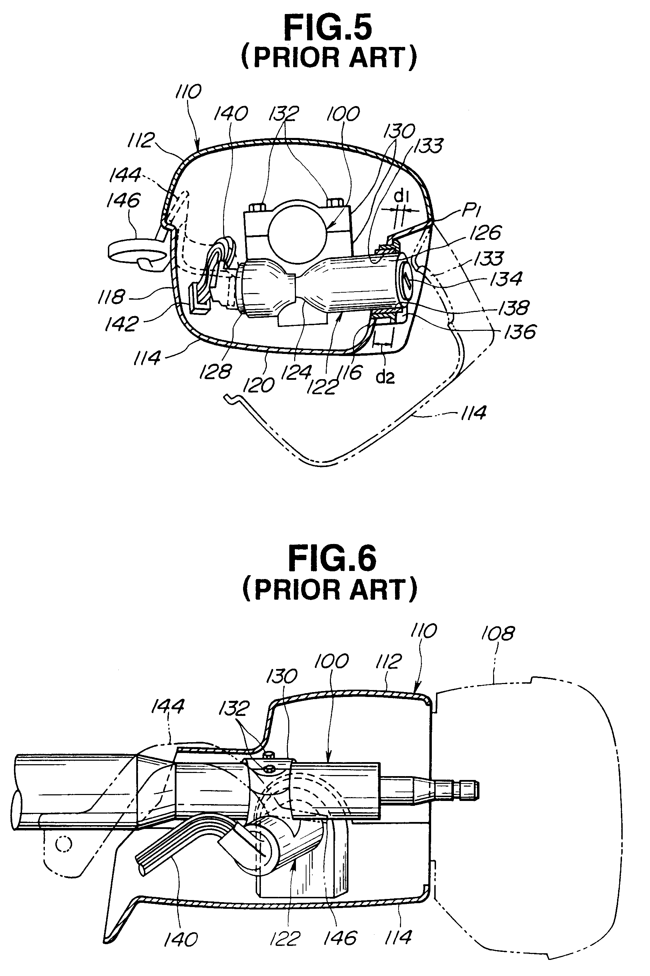

As is seen from Fig. 5, the steering column cover 110 has upper and lower half portions 112, 114 which are joined with each other. As is shown by the broken line in Fig. 5, for joining the upper and lower half portions 112, 114 with each other, for example, one of the upper ends of the lower portion 114 is brought into engagement with the upper portion 112 at a point "P1". Then, the lower portion 114 is swung about the point "P1" until the other of the upper ends is engaged with the upper portion 112.

The lower half portion 114 has first and second side wall portions 116, 118 and a base wall portion 120. In general, the steering column cover 110 is molded. Thus, to facilitate the removal of the molded product (each of the upper and lower half portions 112, 114) from the mold, it is general that, for example, each of a first angle between the first side wall portion 116 and the base wall portion 120 and a second angle between the second side wall portion 118 and the base wall portion 120 is greater than 90 degrees, as is illustrated in Fig. 5.

A key cylinder 122 has a middle portion 124 and first and second end portions 126, 128. The key cylinder 122 is supported at the middle portion 124 thereof by the steering column 100 through brackets 130, bolts 132 and nuts (not shown). The first end portion 126 protrudes beyond the first side wall portion 116 through an opening 133 and has a key hole 134 for receiving an ignition key (not shown). A key escutcheon 136 is attached to the key cylinder 122 so as to surround the key hole 134. The key escutcheon 136 is formed at its inner circumferential portion with a ring light 138. As is seen from Figs. 4-6, an electrical lead 140 extends toward the vehicle front, and is connected at one end thereof with the second end portion 128 of the key cylinder 122 and at the other end thereof with an ignition switch connector 142 (see Fig. 5). This connector 142 constitutes an end portion of a wire harness (not shown) which is connected to an electric system (not shown) for starting an automotive engine (not shown). A tilt lever 144 is shaped so as not to interfere with other automotive components, and has an end tongue portion 146 beside the steering column cover 110 (see Figs. 4 and 5).

As is seen from Fig. 5, the key cylinder 122 is arranged relative to the first side wall portion 116 such that an angle between a longitudinal axis of the key cylinder 122 and the first side wall portion 116 is not 90 degrees. In other words, as illustrated in Fig. 5, the key cylinder 122 is slanted relative to the first side wall portion 116 such that the distance between the base wall portion 120 and the second end portion 128 of the key cylinder 122 is shorter than that between the base wall portion 120 and the first end portion 126 of the key cylinder 122. Therefore, as illustrated in Fig. 5, the length of the protruded first end portion 126, which is defined along the longitudinal axis of the key cylinder 122, increases, as moved from the upper end to the lower end of the first end portion 126 in the direction perpendicular to the longitudinal axis of the key cylinder 122. Thus, the first end portion 126 has a shape of a cylinder which has been truncated obliquely relative to the circular base having thereon the key hole 134. Therefore, the key escutcheon 136 has a shape which conforms to that of the first end portion 126. In other words, the thickness of the key escutcheon 136 which has been attached to the key cylinder 122 increases from "d1" to "d2" as moved from the upper end to the lower end of the key escutcheon 136.

### SUMMARY OF THE INVENTION

It is an object of the present invention to provide an arrangement for an automotive steering column, which is simple in construction and improved in external appearance and can be produced with a low cost.

According to the present invention, there is provided an arrangement for an automotive steering column, comprising: a steering column cover for covering a portion of the steering column, said steering column cover having a side wall portion and a base wall portion that meet each other, an angle between a major surface of said side wall portion and a major surface of said base wall portion being greater than 90 degrees, said side wall portion having an opening formed therethrough; a key cylinder covered by said steering column cover, said key cylinder having a longitudinal axis, first and second end portions and a middle portion, said middle portion being supported by the steering column, said first end portion having a key hole which is exposed through said opening; a key escutcheon surrounding said key hole; an ignition switch connector connected to said second end portion; and a tilt lever for tilting the steering column,
characterized in that said key cylinder is arranged relative to said side wall portion such that said longitudinal axis of said key cylinder is substantially perpendicular to said major surface of said side wall portion, that a portion of said base wall portion being depressed so as to define a cavity positioned below said second end portion, that at least an end portion of said tilt lever is received in said cavity, that said key cylinder has a connection portion formed on said second end portion, and that said ignition switch connector is directly connected to said connection portion of the key cylinder.

### BRIEF DESCRIPTION OF THE DRAWINGS

Fig. 1 is a plan view of an arrangement for an automotive steering column according to the present invention, which view is taken from above in the direction perpendicular to the longitudinal axis of the steering column, showing an interior of a steering column cover;
Fig. 2 is a view of the arrangement, which is taken in the direction of the arrow "A" of Fig. 1, showing the interior of the steering column cover;
Fig. 3 is a view of the arrangement, which is taken in the direction of the arrow "B" of Fig. 1, showing the interior of the steering column cover; and
Figs. 4, 5 and 6 are views which are respectively similar to Figs. 1, 2 and 3, but showing a conventional arrangement for an automotive steering column.

### DESCRIPTION OF THE PREFERRED EMBODIMENTS

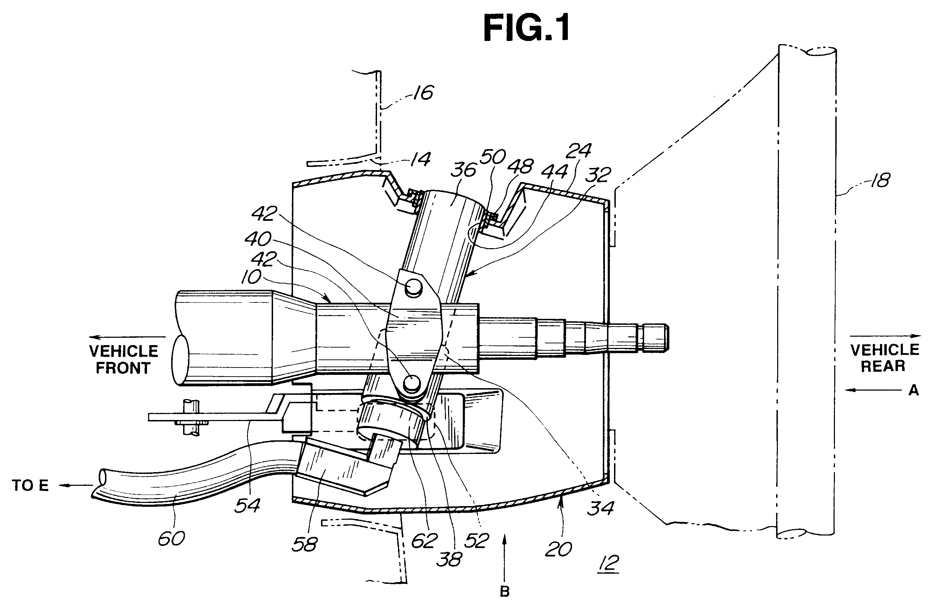

With reference to Figs. 1-3, an arrangement for an automotive steering column, which is in accordance with the present invention, will be described in the following.

As is seen from Fig. 1, an automotive steering column 10 extends to a passenger's room 12 through an opening 14 of an instrument panel 16 and is connected at an upper end thereof with a steering wheel 18. A steering column cover 20 is provided for covering an upper end portion of the steering column 10. The opening 14 has a sufficient size so as to receive therein the steering column cover 20, as illustrated.

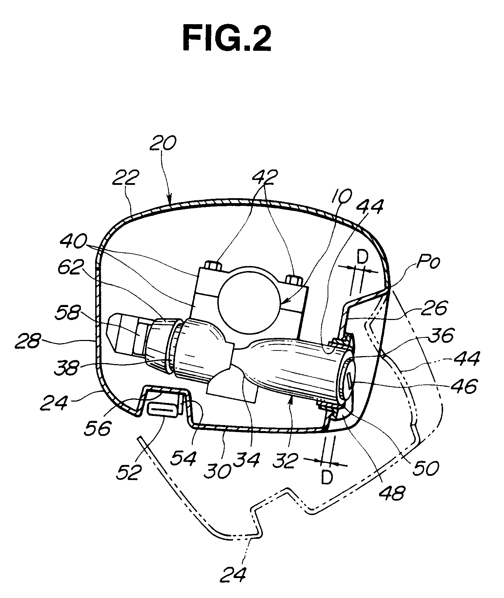

As is seen from Fig. 2, the steering column cover 20 has upper and lower half portions 22, 24 which are joined with each other. As is shown by the broken line in Fig. 2, for joining the upper and lower half portions 22, 24 with each other, for example, one of the upper ends of the lower portion 24 is brought into engagement with the upper portion 22 at a point "P₀". Then, the lower portion 24 is swung about the point "P₀" until the other of the upper ends is engaged with the upper portion 22. The lower half portion 24 has first and second side wall portions 26, 28 and a base wall portion 30. Similar to the above-mentioned conventional arrangement, each of a first angle between the major surface of the first side wall portion 26 and the major surface of the base wall portion 30 and a second angle between the major surface of the second side wall portion 28 and the major surface of the base wall portion 30 is greater than 90 degrees, as is illustrated in Fig. 2.

A key cylinder 32 has a middle portion 34 and first and second end portions 36, 38. The key cylinder 32 is supported at the middle portion 34 by the steering column 10 through brackets 40, bolts 42 and nuts (not shown). The first end portion 36 protrudes beyond the first side wall portion 26 through an opening 44 formed therethrough and has a key hole 46. A key escutcheon 48 is attached to the key cylinder 32 so as to surround the key hole. The key escutcheon 48 is formed at its inner circumferential portion with a ring light 50. In contrast to the conventional arrangement, the key cylinder 32 according to the present invention is arranged relative to the first side wall portion 26 such that a longitudinal axis of the key cylinder 32 is substantially perpendicular to the major surface of the first side wall portion 26 (see Fig. 2). Therefore, unlike the conventional arrangement, the length of the first end portion 36 protruded beyond the first side wall portion 26, which is defined along the longitudinal axis of the key cylinder 32, is substantially uniform. Thus, unlike the conventional arrangement, the first end portion 36 becomes cylindrical in shape. Therefore, the key escutcheon 48 also has a cylindrical shape which conforms to that of the first end portion 36. In other words, the thickness of the key escutcheon 48 which has been attached to the key cylinder 32 is uniformly "D" from the upper end to the lower end of the key escutcheon 48. It should be noted that the production cost of the key escutcheon 48 of this shape is relatively low, as compared with the conventional key escutcheon 136.

As is mentioned hereinabove, the first end portion 36 and the key escutcheon 48 are cylindrical in shape. Therefore, when the lower half portion 24 is jointed with the upper half portion 22, the first end portion 36 is more smoothly fitted into the opening 44 by swinging the lower half portion 24 about the point "P₀", as compared with the conventional arrangement.

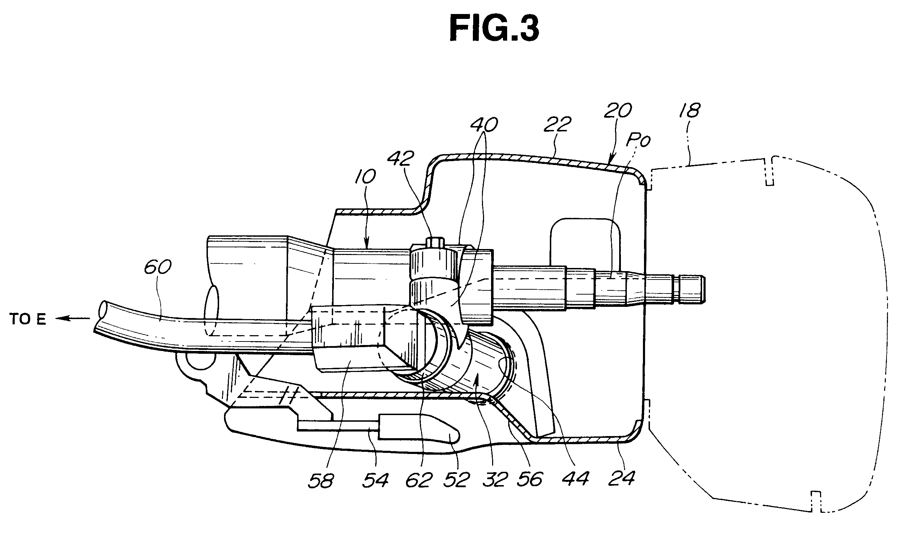

As is mentioned hereinabove, the longitudinal axis of the key cylinder 32 is substantially perpendicular to the major surface of the first side wall portion 26. In other words, the key cylinder 32 is slanted relative to the major surface of the base wall portion 30, as illustrated in Fig. 2. Thus, unlike the conventional arrangement, an end tongue portion 52 of a tilt lever 54 is allowed to be positioned below the second end portion 38 of the key cylinder 32, without protruding beyond the major surface of the base wall portion 30. For this purpose, a portion of the base wall portion 30 is depressed so as to provide a cavity 56 for receiving therein the tongue portion 52 and a part of the tilt lever 54 (see Fig. 3).

As is shown in Fig. 3, the lower half portion 24 of the steering column cover 20 is shaped such that the tilt lever 56 and its tongue portion 54 do not come into the driver's view while the driver is in a driving position. This substantially improves the external appearance of the arrangement. Furthermore, the shape of the tilt lever according to the present invention is substantially simplified, as compared with the conventional arrangement. With this, the production cost of the tilt lever is reduced.

The steering column cover 20 according to the present invention is somewhat larger than the conventional steering column cover 110 in terms of width which is defined in the horizontal direction in Fig. 2. The instrument panel 16 has the opening 14 for receiving therein the steering column cover 20. This opening 14 has a certain limited size in terms of width defined in the horizontal direction so as not to interfere with other components' arrangements in an automobile. According to the present invention, the tongue portion 52 of the tilt lever 54 is positioned below the second end portion 38 of the key cylinder 32. Therefore, as compared with the conventional arrangement, there is provided a space between the second side wall portion 28 and the instrument panel 16 so as to allow the expansion of the steering column cover 20 in a direction of width defined in the horizontal direction in Fig. 2. The thus expanded steering column cover 20 according to the present invention has therein a sufficient space so as to allow an ignition switch connector 58 to be positioned beside the second end portion 38 of the key cylinder 32. This ignition switch connector 58 serves to connect an electric system (E) for starting an automotive engine with the key cylinder 32. In fact, the ignition switch connector 58 constitutes an end portion of a wire harness 60 connected to the electric system (E). Unlike the conventional arrangement, the ignition switch connector 58 is directly connected to a connection portion 62 formed on the second end portion 38 of the key cylinder 32, without using an electrical lead between the ignition switch connector 58 and the connection portion 62. With this, the assembly work of the arrangement is simplified and the production cost is reduced.

## Claims

1. An arrangement for an automotive steering column (10), comprising: a steering column cover (20) for covering a portion of the steering column (10), said steering column cover (20) having a side wall portion (26) and a base wall portion (30) that meet each other, an angle between a major surface of said side wall portion (26) and a major surface of said base wall portion (30) being greater than 90 degrees, said side wall portion (26) having an opening (44) formed therethrough; a key cylinder (32) covered by said steering column cover (20), said key cylinder (32) having a longitudinal axis, first and second end portions (36, 38) and a middle portion (34), said middle portion (34) being supported by the steering column (10), said first end portion (36) having a key hole (46) which is exposed through said opening (44); a key escutcheon (48) surrounding said key hole (46); an ignition switch connector (58) connected to said second end portion (38); and a tilt lever (54) for tilting the steering column (10),
characterized in that said key cylinder (32) is arranged relative to said side wall portion (26) such that said longitudinal axis of said key cylinder (32) is substantially perpendicular to said major surface of said side wall portion (26), that a portion of said base wall portion (30) being depressed so as to define a cavity (56) positioned below said second end portion (38), that at least an end portion (52) of said tilt lever (54) is received in said cavity (56), that said key cylinder (32) has a connection portion (62) formed on said second end portion (38), and that said ignition switch connector (58) is directly connected to said connection portion (62) of the key cylinder (32).

2. An arrangement according to Claim 1, wherein said ignition switch connector (58) connects an electric system for starting an automotive engine with said key cylinder (32).

3. An arrangement according to Claim 2, wherein said ignition switch connector (58) is covered by said steering column cover (20) and positioned beside said connection portion (62) of the key cylinder (32).

4. An arrangement according to Claim 1, wherein said first end portion (36) of said key cylinder (32) protrudes beyond said side wall portion (26), and wherein said first end portion (36) and said key escutcheon (48) attached to said first end portion (36) are cylindrical in shape.

## Patentansprüche

1. Anordnung für eine Automobillenksäule (10) mit: einer Lenksäulenabdeckung (20) zum Abdecken eines Abschnittes der Lenksäule (10), wobei die Lenksäulenabdeckung (20) einen Seitenwandungsabschnitt (26) und einen Basiswandungsabschnitt (30) aufweist, die einander treffen, wobei ferner ein Winkel zwischen einer Hauptoberfläche des Seitenwandungsabschnittes (26) und einer Hauptoberfläche des Basiswandungsabchnittes (30) größer als 90° ist, dieser Seitenwandungsabschnitt (26) eine darin ausgeformte Öffnung (44) aufweist; einem Schlüsselzylinder (32), der von dieser Lenksäulenabdeckung (20) abgedeckt ist, wobei dieser Schlüsselzylinder (32) eine Längsachse, erste und zweite Endabschnitte (36, 38) sowie einen Mittelabschnitt (34) aufweist, wobei dieser Mittelabschnitt (34) von der Lenksäule (10) gehaltert ist, dieser erste Endabschnitt (36) ein Schlüsselloch (46) enthält, welches durch diese Öffnung (44) zugänglich ist; einem Schlüsselschließschild (48), welches das Schlüsselloch (46) umgibt; einem Zündschalterverbinder (58), der an diesem zweiten Endabschnitt (38) angeschlossen ist; und mit einem Kipphebel (54) zum Verstellen der Lenksäule (10), **dadurch gekennzeichnet**, daß der Schlüsselzylinder (32), bezogen auf diesen Seitenwandungsabschnitt (26), derart angeordnet ist, daß die Längsachse des Schlüsselzylinders (32) im wesentlichen senkrecht auf dieser Hauptoberfläche des Seitenwandungsabschnittes (26) steht, daß ein Bereich des Basiswandungsabschnittes (30) eingedrückt ist, um einen Hohlraum (56) zu bilden, der unterhalb des zweiten Endabschnittes (38) positioniert ist, daß zumindest ein Endabschnitt (52) des Kipphebels (54) in diesen Hohlraum (56) aufgenommen ist, daß der Schlüsselzylinder (32) einen Verbindungsabschnitt (62) aufweist, der auf dem zweiten Endabschnitt (38) ausgebildet ist, und daß der Zündschalterverbinder (58) direkt an diesen Verbindungsabschnitt (62) des Schlüsselzylinders (32) angeschlossen ist.

2. Anordnung nach Anspruch 1, **dadurch gekennzeichnet**, daß der Zündschalterverbinder (58) ein elektrisches System zum Starten eines Automobilmotores mittels des Schlüsselzylinders (32) verbindet.

3. Anordnung nach Anspruch 2, **dadurch gekennzeichnet**, daß der Zündschalterverbinder (58) von der Lenksäulenabdeckung (20) abgedeckt und seitlich des Verbindungsabschnittes (62) des Schlüsselzylinders (32) positioniert ist.

4. Anordnung nach Anspruch 1, **dadurch gekennzeichnet**, daß dieser erste Endabschnitt (36) des Schlüsselzylinders (32) über diesen Seitenwandungsabschnitt (26) sich hinaus erstreckt und daß der erste Endabschnitt (36) und dieses Schlüsselschließschild (48), das an dem ersten Endabschnitt (36) angeschlossen ist, eine zylinderförmige Form aufweisen.

## Revendications

1. Agencement pour une colonne de direction d'automobile (10) comprenant : un couvercle (20) de colonne de direction pour couvrir une portion de la colonne de direction (10), ledit couvercle (20) de la colonne de direction ayant une portion de paroi latérale (26) et une portion de paroi de base (30) qui se rencontrent, un angle entre une surface majeure de ladite portion de paroi latérale (20) et une surface majeure de ladite portion de paroi de base (30) étant plus grand que 90 degrés, ladite portion de paroi latérale (26) ayant une ouverture (44) qui la traverse ; un cylindre (32) pour la clef couvert dudit couvercle (20) de la colonne de direction, ledit cylindre (32) ayant un axe longitudinal, des première et seconde portions extrêmes (36, 38) et une portion médiane (34), ladite portion médiane (34) étant supportée par la colonne de direction (10), ladite première portion extrême (36) ayant un trou de serrure (46) qui est exposé à travers ladite ouverture (44) ; une entrée de serrure (48) entourant ledit trou de serrure (46) ; un connecteur d'allumage (58) connecté à ladite seconde portion extrême (38) ; et un levier à basculement (54) pour faire basculer la colonne de direction (10),
caractérisé en ce que ledit cylindre (32) de la clef est agencé relativement à ladite portion de paroi latérale (26) de manière que ledit axe longitudinal dudit cylindre (32) de la clef soit sensiblement perpendiculaire à ladite surface majeure de ladite portion de paroi latérale (26), qu'une portion de ladite portion de paroi de base (30) soit abaissée afin de définir une cavité (56) placée en-dessous de ladite seconde portion extrême (38), qu'au moins une portion extrême (52) dudit levier du basculement (54) soit reçue dans ladite cavité (56), que ledit cylindre de clef (32) ait une portion de connexion (62) formée sur ladite seconde portion extrême (38) et que ledit connecteur d'allumage (58) soit directement connecté à la portion de connexion (62) du cylindre (32) de la clef.

2. Agencement selon la revendication 1, où ledit connecteur d'allumage (58) connecte un système électrique pour le démarrage d'un moteur d'automobile avec ledit cylindre (32) de la clef.

3. Agencement selon la revendication 2, où ledit connecteur d'allumage (58) est couvert par ledit couvercle de la colonne de direction (20) et est placé à côté de ladite portion de connexion (62) du cylindre (32) de la clef.

4. Agencement selon la revendication 1, où ladite première portion extrême (36) dudit cylindre (32) de la clef dépasse au-delà de ladite portion de paroi latérale (26) et où ladite première portion extrême (36) et ladite entrée de serrure (48) attachée à ladite première portion extrême (36) sont de forme cylindrique.
